# EUROPEAN PATENT APPLICATION

(11) **EP 2 017 236 A1**
(43) Date of publication of application: **21.01.2009**
(21) Application number: 07742699.7
(22) Date of filing: 27.04.2007
(51) Int. Cl.: C03C 8/02, C03C 8/04, H01J 29/87

(54) **GLASS COMPOSITION AND GLASS SPACER USING THE SAME**

(30) Priority: 02.05.2006 JP 2006128188
(71) Applicant: Nippon Sheet Glass Company, Limited, Tokyo 108-6321 (JP)
(72) Inventor: FUJIWARA, Kosuke, Minato-ku, Tokyo 108-6321 (JP); KOYAMA, Akihiro, Minato-ku, Tokyo 108-6321 (JP); KAMBAYASHI, Hiroshi, Minato-ku, Tokyo 108-6321 (JP)
(74) Representative: Hart-Davis, Jason
(86) International application number: PCT/JP2007/059264
(87) International publication number: WO 2007/129629

(57) **Abstract**

The present invention provides a glass composition that has good formability and tends not to cause electric-field breakdown when formed into a spacer for an electron beam-excited display. The present invention relates to a glass composition that contains the following components, in terms of mass%: 20 ≤ SiO₂ < 40, 6 < B₂O₅ ≤ 30, 0 ≤ Al₂O₃ ≤ 20, 45 ≤ (SiO₂+B₂O₃+Al₂O₃) ≤ 74, 0 ≤ MgO ≤ 15, 5 ≤ CaO ≤ 40, 0 ≤ SrO ≤ 30, 0 ≤ BaO < 25, 0 < (SrO+BaO) ≤50, 20 ≤ (MgO+CaO+SrO+BaO) < 60, 0 ≤ ZnO ≤ 10, 0 ≤ ZrO₂ < 10, 0 ≤ La₂O₃ ≤ 20, 0 ≤ Y₂O₃ ≤ 10, 0 ≤ TiO₂ ≤ 3, 1 ≤ Fe₂O₃ ≤ 12, 0 ≤ Nb₂O₅ ≤ 10, 0 ≤ Ta₂O₅ ≤ 10, and 1 ≤ TiO₂+Fe₂O₃+Nb₂O₅+Ta₂O₅ ≤ 12 and that is substantially free of alkali metal oxide.

## Description

### Technical Field

The present invention relates to glass compositions. The present invention also relates to glass spacers formed using the glass compositions, particularly glass spacers that are used suitably for electron beam-excited displays.

### Background Art

A self-luminous electron beam-excited display forms an image by irradiating phosphors with an electron beam emitted from an electron beam source and thereby allowing them to generate fluorescence. Recently, the self-luminous electron beam-excited display is used widely and practically as a flat display. As compared to a liquid crystal display, the electron beam-excited display is characterized by obtaining bright images and having a wide viewing angle.

Since the flat electron beam-excited display forms an image by irradiating phosphors with an electron beam, it is necessary to incorporate an electron beam source, phosphors, and other components into a vacuum container with an atmosphere having a pressure of approximately 10⁻³ Pa or lower. For instance, a vacuum container with an atmospheric pressure resistant structure described in JP 7(1995)-230776 A has been proposed.

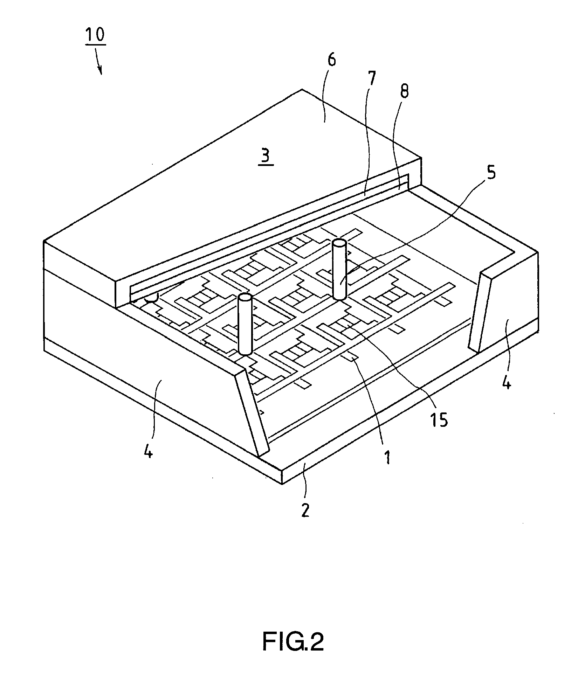

FIG. 2 is a partially cutaway perspective view of a flat electron beam-excited display. A faceplate 3 in which a fluorescent film 7 and a metal back 8 to serve as an accelerating electrode are formed on the inner surface of a glass substrate 6 is disposed in the upper part. A rear plate 2 is disposed opposing the faceplate 3, with a supporting frame 4 interposed therebetween. An electron source 1 with a plurality of electron-emitting elements 15 disposed in the form of a matrix is fixed to the rear plate 2. High voltage is applied between the electron source 1 and the metal back 8 by a power source (not shown). The rear plate 2 and the supporting frame 4 as well as the faceplate 3 and the supporting frame 4 are sealed together, respectively, with, for example, frit glass and thereby form a vacuum container 10.

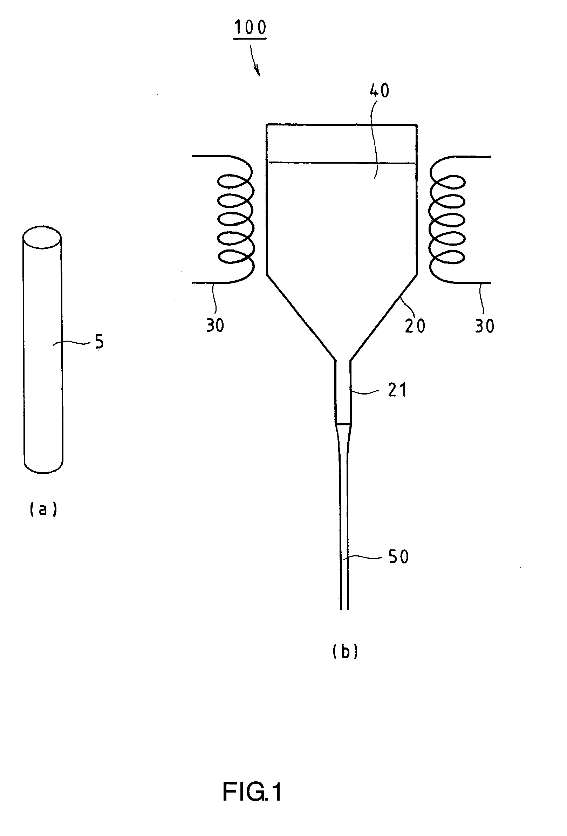

Glass spacers 5 are provided inside the vacuum container 10. In order to form the vacuum container 10 into an atmospheric pressure resistant structure, a required number of glass spacers 5 are disposed at required intervals. Glass spacers include a flat-plate glass spacer that is referred to as a rib and a pillar-shaped glass spacer that is referred to as a pillar. In FIG. 1, each glass spacer 5 is processed into, for example, a columnar shape with a diameter of 0.1 mm and a height of 1 mm.

The following method has been proposed in JP 2000-203857 A as a method of producing a glass spacer with high precision. That is, a glass preform whose cross-sectional shape is substantially a similar figure to a desired cross-sectional shape of the glass spacer is prepared, and this glass preform is drawn while being heated so that the viscosity thereof reaches 10⁵ dPa·sec to 10⁹ dPa·sec (10⁵ poise to 10⁹ poise). This method also is referred to as a "redraw method". This method makes it possible to improve the degree of similarity in cross-sectional shape between the glass preform and drawn glass and thereby to produce a glass spacer with a desired shape easily.

Furthermore, for example, a columnar glass spacer also can be produced with high precision by a method in which a glass material melted in a refractory container provided with a nozzle is withdrawn through the nozzle. This method also is referred to as a direct spinning method. The direct spinning method makes it possible to produce large amounts of glass spacers continuously at a time and is the method that allows columnar glass spacers to be produced with the highest precision.

As prior art relating to glass spacers, a glass spacer described in JP 2003-526187 A is mentioned. This document describes a glass spacer with a volume resistivity of 10⁵ to 10¹³ Ω·cm. Furthermore, it recommends that the glass spacer contain 25 to 75 mol% of SiO₂ and 1 to 30 mol% of transition element compound and further contain 5 to 10 mol% of alkali metal compound. Similarly in the examples described therein, spacers containing alkali metal compounds are used.

A glass spacer for an electron beam-excited display device serves to keep the space between both the front panel and the rear panel of a vacuum container constant. This glass spacer is exposed to electron-emitting elements. Therefore, when a large amount of alkali metal oxide is contained in glass that forms the glass spacer, there is a problem that bias voltage scatters alkali metal ions and thereby electric-field breakdown is caused. Furthermore, when a large amount of alkali metal oxide is contained, glass with a high Young's modulus cannot be obtained. Moreover, the heat resistance of the glass also is deteriorated.

JP 2002-104839 A describes, as a glass spacer that is free of alkali metal oxide, a glass spacer for an electron beam-excited display device that has a composition substantially free of alkali metal oxide and also free of oxide of transition metal that is present in a plurality of oxidation states.

JP 2004-43288 A describes glass having a composition in which the content of (TiO₂+Nb₂O₅+SnO₂+Ta₂O₅+WO₃+CeO₂) is at least 10 mol% and a field emission display device including a spacer formed of the glass. In the examples described in this document, the glass spacers contain at least 15 mol% of Nb₂O₅.

JP 2004-71158 A describes a glass spacer for an electron beam excitation display that has a composition containing 30 to 80 mol% of SiO₂ and 10 to 40 mol% of oxide of transition metal.

JP 2005-263613 A describes a glass spacer in which the total content of SiO₂ and TiO₂ is 50 to 80 mol%, specifically, the content of SiO₂ is 20 to 50 mol% and the content of TiO₂ is 25 to 45 mol%, and a method of producing the same as well as a field emission display.

In these glass spacers, the electric-field breakdown is prevented and the quality thereof was satisfactory. However, the glass spacers are produced with tensile force applied thereto as described above and those glass spacers may be difficult to form during production thereof. Thus, there has been room for improvement in formability.

### Disclosure of Invention

An object of the present invention is to provide a glass composition that has good formability and tends not to cause electric-field breakdown when formed into a spacer for an electron beam-excited display. Another object of the present invention is to provide a glass spacer composed of the glass composition and an electron beam-excited display including the same.

The present invention relates to a glass composition that contains the following components, in terms of mass%:
20 ≤ SiO₂ < 40,
6<B₂O₃≤30,
0 ≤ Al₂O₃ ≤ 20,
45 ≤ SiO₂+B₂O₃+Al₂O₃ ≤ 74,
0≤MgO≤15,
5≤CaO≤40,
0≤SrO≤30,
0 ≤ BaO < 25,
0 < (SrO+BaO) ≤ 50,
20 ≤ (MgO+CaO+SrO+BaO) ≤ 60,
0≤ ZnO ≤ 10,
0 ≤ ZrO₂ < 10,
0 ≤ La₂O₃ ≤ 20,
0≤ Y₂O₃ ≤ 10,
0 ≤ TiO₂ ≤ 3,
1 ≤ Fe₂O₃ ≤ 12,
0 ≤ Nb₂O₅ ≤ 10,
0 ≤ Ta₂O₅ ≤ 10, and
1 ≤ TiO₂+Fe₂O₃+Nb₂O₅+Ta₂O₅ ≤ 12, and
that is substantially free of alkali metal oxide.

The present invention also relates to a glass spacer composed of this glass composition.

Furthermore, the present invention relates to an electron beam-excited display including a vacuum container as well as electron-emitting elements and a glass spacer that are disposed inside the vacuum container, wherein the glass spacer is composed of the aforementioned glass composition.

The glass composition according to the present invention tends not to cause electric-field breakdown and has good formability. Therefore, a glass spacer formed from the glass composition is suitable for an electron beam-excited display. An electron beam-excited display provided with the glass spacer tends not to cause electric-field breakdown in the glass spacer.

### Brief Description of Drawings

FIG. 1 is a schematic view for explaining a glass spacer according to the present invention and apparatus for manufacturing the same.
FIG. 2 is a partially cutaway perspective view of a flat electron beam-excited display.

### Description of the Preferred Embodiments

Hereinafter, embodiments of the present invention are described.

### [Glass Composition]

First, a glass composition according to the present invention is described below in detail. The unit "%" indicated in this specification denotes "mass%" unless otherwise specified.

### <SiO₂>

Silicon dioxide (SiO₂) is an essential main component forming the skeleton of glass. It also is a component that adjusts the devitrification temperature and viscosity of glass and further is a component that improves among chemical durability, particularly acid resistance. When the SiO₂ content is less than 20%, the devitrification temperature increases and thereby it becomes difficult to form the glass into the shape of a glass spacer. Furthermore, similarly in the case where the content is 40% or more, the devitrification temperature increases and thereby it becomes difficult to form the glass into the shape of a glass spacer.

Accordingly, the lower limit of SiO₂ is at least 20%, preferably at least 23%, more preferably at least 25%, and most preferably at least 27%. On the other hand, the upper limit of SiO₂ is lower than 40% and preferably 35% or lower.

### <B₂O₃>

Boron trioxide (B₂O₃) is a component forming the skeleton of glass. It also is a component that adjusts the devitrification temperature and viscosity of glass. Furthermore, it also is used as a glass melting aid. When the B₂O₃ content is 6% or less, B₂O₃ cannot provide the effect as a glass melting aid. On the other hand, when the B₂O₃ content exceeds 30%, the glass tends to undergo phase separation, and further the chemical durability of the glass also is deteriorated.

Accordingly, the lower limit of B₂O₃ is higher than 6%, preferably at least 8%, and more preferably at least 10%. The upper limit of B₂O₃ is 30% or lower, preferably 25% or lower, and more preferably 20% or lower.

### <Al₂O₃>

Aluminum oxide (Al₂O₃) is a component forming the skeleton of glass. It also is a component that adjusts the devitrification temperature and viscosity of glass and further is a component that improves, among chemical durability, particularly water resistance. On the other hand, Al₂O₃ also is a component that deteriorates, among chemical durability, acid resistance. When the Al₂O₃ content exceeds 20%, the melting point of glass increases and thereby it becomes difficult to melt the raw material uniformly. Furthermore, since the devitrification temperature increases, it becomes difficult to form the glass into the shape of a glass spacer.

Accordingly, Al₂O₃ does not need to be contained but preferably it is contained. The lower limit thereof is preferably at least 3% and more preferably at least 5%. The upper limit of Al₂O₃ is 20% or lower, preferably 15% or lower, more preferably 12% or lower, and most preferably 10% or lower.

### <SiO₂+B₂O₃+Al₂O₃>

SiO₂, B₂O₃ and Al₂O₃ are components forming the skeleton of glass and the total content (SiO₂+Al₂O₃) thereof is important for the formability of the glass.

When the total content (SiO₂+B₂O₃+Al₂O₃) is less than 45%, the devitrification temperature increases and thereby it becomes difficult to form the glass into a glass spacer. Furthermore, the chemical durability of the glass is deteriorated. On the other hand, when the total content exceeds 74%, the melting point of the glass increases and thereby it becomes difficult to melt the raw material uniformly. Moreover, the devitrification temperature increases and thereby it becomes difficult to form the glass into a glass spacer.

Accordingly, the lower limit of (SiO₂+B₂O₃+Al₂O₃) is at least 45% and preferably at least 48%. The upper limit of (SiO₂+B₂O₃+Al₂O₃) is 74% or lower, preferably 70% or lower, more preferably 65% or lower, and most preferably 60% or lower.

### <MgO, CaO, SrO, BaO>

Alkaline earth oxides (MgO, CaO, SrO, and BaO) are components that adjust the devitrification temperature and viscosity of glass and also improve the thermal expansion coefficient and Young's modulus of glass. Particularly, strontium oxide (SrO) and barium oxide (BaO) are highly effective in decreasing the devitrification temperature of glass.

When the content of magnesium oxide (MgO) exceeds 15%, the devitrification temperature increases and thereby it becomes difficult to form the glass into the shape of a glass spacer.

Therefore, MgO does not need to be contained, and the upper limit of MgO is 15% or lower, preferably 10% or lower, and more preferably 5% or lower.

When the content of calcium oxide (CaO) is less than 5%, it cannot be sufficiently effective in adjusting the devitrification temperature and viscosity of glass. On the other hand, when the content of calcium oxide exceeds 40%, the devitrification temperature increases and thereby it becomes difficult to form the glass into the shape of a glass spacer.

Accordingly, the lower limit of CaO is at least 5% and preferably exceeds 10%. On the other hand, the upper limit of CaO is 40% or lower and preferably lower than 30%.

When the content of strontium oxide (SrO) exceeds 30%, the devitrification temperature increases and thereby it becomes difficult to form a glass spacer.

Accordingly, SrO does not need to be contained but preferably is contained. The lower limit thereof is preferably at least 5%. On the other hand, the upper limit of SrO is 30% or lower and preferably 20% or lower.

When the content of barium oxide (BaO) is at least 25%, the devitrification temperature increases and thereby it becomes difficult to form a glass spacer.

Therefore, BaO does not need to be contained, and the upper limit of BaO is lower than 25%, preferably 20% or lower, and more preferably 15% or lower.

### <SrO+BaO>

SrO and BaO are components that adjust the devitrification temperature and viscosity of glass, and the total content (SrO+BaO) thereof is important for the formability of the glass.

When SrO and BaO are not contained, the devitrification temperature and viscosity cannot be adjusted sufficiently. On the other hand, when (SrO+BaO) exceeds 50%, the devitrification temperature increases and thereby it becomes difficult to form the glass into the shape of a glass spacer.

Accordingly, either SrO or BaO must be contained and it is preferable that the lower limit of (SrO+BaO) be at least 5%. On the other hand, the upper limit of (SrO+BaO) is 50% or lower, preferably 30% or lower, more preferably lower than 25%, and most preferably 20% or lower.

### <MgO+CaO+SrO+BaO>

When the total content (MgO+CaO+SrO+BaO) of alkaline earth metal oxides (MgO, CaO, SrO, and BaO) is less than 20%, the devitrification temperature and viscosity cannot be adjusted sufficiently. On the other hand, when the total content (MgO+CaO+SrO+BaO) exceeds 60%, the devitrification temperature increases and thereby it becomes difficult to form the glass into the shape of a glass spacer.

Accordingly, the lower limit of (MgO+CaO+SrO+BaO) is at least 20% and preferably at least 25%. On the other hand, the upper limit of (MgO+CaO+SrO+BaO) is 60% or lower, preferably 50% or lower, more preferably 45% or lower, and most preferably 40% or lower.

### <ZnO>

Zinc oxide (ZnO) is a component that adjusts the devitrification temperature and viscosity of glass. When the ZnO content exceeds 10%, the devitrification temperature increases and thereby it becomes difficult to form the glass into the shape of a glass spacer.

Accordingly, ZnO does not need to be contained, and the upper limit of ZnO is 10% or lower and preferably 5% or lower.

### <Li₂O, Na₂O, K₂O>

Alkali metal oxide contained in glass may cause electric-field breakdown in an electron beam-excited display. Therefore the glass composition of the present invention is substantially free of alkali metal oxide.

### <ZrO₂>

Zirconium dioxide (ZrO₂) improves the chemical durability of glass. Furthermore, it also improves the heat resistance properties of glass. However, when the ZrO₂ content is 10% or more, the devitrification temperature of the glass increases and thereby it becomes difficult to form the glass into the shape of a glass spacer.

Accordingly, ZrO₂ does not need to be contained, and the upper limit of ZrO₂ is lower than 10% and preferably 5% or lower.

### <La₂O₃>

Lanthanum oxide (La₂O₃) is a component that adjusts the devitrification temperature and viscosity of glass and improves the Young's modulus of glass. When the La₂O₃ content exceeds 20%, the devitrification temperature increases and thereby it becomes difficult to form the glass into the shape of a glass spacer.

Accordingly, La₂O₃ does not need to be contained but preferably it is contained. The upper limit of La₂O₃ is 20% or lower, preferably 15% or lower, more preferably 12% or lower, and most preferably 10% or lower.

### <Y₂O₃>

Yttrium oxide (Y₂O₃) is a component that adjusts the devitrification temperature and viscosity of glass and improves the Young's modulus of glass. When the Y₂O₃ content exceeds 10%, the devitrification temperature increases and thereby it becomes difficult to form the glass into the shape of a glass spacer.

Accordingly, Y₂O₃ does not need to be contained, and the upper limit of Y₂O₃ is 10% or lower and preferably 5% or lower.

### <Oxides of transition metal present in a plurality of oxidation states>

Conventional glass spacers contain oxides of transitional metals, for example, Ti, V, Cr, Mn, Fe, Ni, Cu, and Nb, that are present in a plurality of oxidation states, so as to be provided with electron conductivity However, when glass contains a large amount of, for example, oxides of these transition metals, the devitrification temperature of the glass increases and thereby it becomes difficult to form a glass spacer. In the present invention, therefore, the content of iron oxide is adjusted and the contents of oxides of transition metals other than Fe are limited.

### <TiO₂>

Titanium oxide (TiO₂) is a component that adjusts the electrical properties of glass and also adjusts the devitrification temperature and viscosity of glass. When the TiO₂ content exceeds 3%, the devitrification temperature of glass increases and thereby it becomes difficult to form the glass into the shape of a glass spacer.

Accordingly, TiO₂ does not need to be contained, and the upper limit of TiO₂ is 3% or lower, preferably 2% or lower, and more preferably 1% or lower, and most preferably glass is substantially free of TiO₂.

### <Fe₂O₃>

Generally, iron (Fe) contained in glass is a component that adjusts the electrical properties of glass and also adjusts the devitrification temperature and viscosity of glass. When the content of iron (Fe) in terms of Fe₂O₃ is less than 1%, the glass does not exhibit sufficiently high electron conductivity. On the other hand, when the content of iron (Fe) in terms of Fe₂O₃ exceeds 12%, the devitrification temperature of the glass increases and thereby it becomes difficult to form the glass into the shape of a glass spacer.

Accordingly, the lower limit of iron (Fe) is at least 1%, preferably at least 2%, and more preferably at least 3%, in terms of Fe₂O₃. On the other hand, the upper limit of Fe₂O₃ is 12% or lower, preferably lower than 10%, more preferably 9% or lower, and most preferably 8% or lower.

### <Nb₂O₅>

Niobium pentoxide (Nb₂O₅) is a component that adjusts the devitrification temperature and viscosity of glass and improves the Young's modulus of glass. Furthermore, it also is a component that adjusts the electrical properties of glass. When the Nb₂O₅ content exceeds 10%, the devitrification temperature increases and thereby it becomes difficult to form the glass into the shape of a glass spacer.

Accordingly, Nb₂O₅ does not need to be contained, and the upper limit of Nb₂O₅ is 10% or lower, preferably 8% or lower, more preferably 6% or lower, and most preferably 5% or lower.

### <Ta₂O₅>

Tantalum pentoxide (Ta₂O₅) is a component that adjusts the devitrification temperature and viscosity of glass and improves the Young's modulus of glass. Furthermore, it also is a component that adjusts the electrical properties of glass. When the Ta₂O₅ content exceeds 10%, the devitrification temperature increases and thereby it becomes difficult to form the glass into the shape of a glass spacer.

Accordingly, Ta₂O₅ does not need to be contained, and the upper limit of Ta₂O₅ is 10% or lower, preferably 8% or lower, more preferably 6% or lower, and most preferably 5% or lower.

### <TiO₂+ Fe₂O₃+ Nb₂O₅+Ta₂O₅>

TiO₂, Fe₂O₃, Nb₂O₅ and Ta₂O₅ whose total content is described as (TiO₂+Fe₂O₃+Nb₂O₅+Ta₂O₅) are components that adjust the electrical properties of glass and also adjust the devitrification temperature and viscosity of glass. When (TiO₂+Fe₂O₃+Nb₂O₅+Ta₂O₅) is less than 1%, the glass does not exhibit sufficiently high electron conductivity. On the other hand, when (TiO₂+Fe₂O₃+Nb₂O₅+Ta₂O₅) exceeds 12%, the devitrification temperature of the glass increases and thereby it becomes difficult to form the glass into the shape of a glass spacer.

Accordingly, the lower limit of (TiO₂+Fe₂O₃+Nb₂O₅+Ta₂O₅) is at least 1%, preferably at least 2%, and more preferably at least 3%. On the other hand, the upper limit of (TiO₂+ Fe₂O₃+ Nb₂O₅+Ta₂O₅) is 12% or lower, preferably lower than 10%, more preferably 9% or lower, and most preferably 8% or lower.

### <V₂O₅>

Furthermore, the raw material of vanadium pentoxide (V₂O₅) may need to be handled with care. Preferably, glass is substantially free of V₂O₅.

### <MnO>

Furthermore, the raw material of manganese oxide (MnO) may need to be handled with care. Preferably, glass is substantially free of MnO.

### <F and P₂O₅>

Since fluorine (F) and phosphorus pentoxide (P₂O₅) tend to volatilize, they may evaporate while being melted. In the present invention, it is preferable that glass be substantially free of them.

### <PbO>

Moreover, the raw material of lead oxide (PbO) may need to be handled with care. Preferably, glass is substantially free of PbO.

In the present invention, the expression "substantially free of a substance" denotes that the substance is not allowed to be contained intentionally except in the case where it is mixed unavoidably, for example, by contamination from industrial raw materials. Specifically, it denotes a content of less than 0.1%, preferably less than 0.05%, and more preferably less than 0.03%.

The glass composition of the present invention can be obtained by mixing known glass materials, melting the mixture by heating it, and then cooling it according to a common procedure. In this case, it is advantageous to carry out, for example, formation and pulverization suitably according to the intended use of the glass composition.

The glass composition of the present invention is useful particularly for glass spacers used for electron beam-excited displays. The glass composition of the present invention exhibits excellent formability in a method of manufacturing glass spacers, such as a direct spinning method. Furthermore, glass spacers for electron beam-excited displays that are formed of the glass composition of the present invention tend not to cause electric-field breakdown.

### [Glass spacer]

The glass spacer of the present invention is formed of the aforementioned glass composition. The respective properties of the glass spacer according to the present invention are described in detail below.

### <Temperature characteristics>

When a glass spacer is manufactured by the direct spinning method, the glass temperature is adjusted so that the molten glass has a viscosity of 100 dPa·sec to 1000 dPa·sec (100 poise to 1000 poise) during spinning. In this case, if the temperature at which the glass has a viscosity of 100 dPa·sec is lower than the devitrification temperature, devitrification (white turbidity caused by crystals generated and grown in the molten glass material) tends to occur during glass formation. The presence of generated crystals in the glass spacer is not preferable in terms of dimensional accuracy and characteristics of the glass spacer. Furthermore, it also adversely affects the formability. Therefore, it is preferable that the temperature difference obtained when the devitrification temperature of the aforementioned glass composition is subtracted from the temperature at which the aforementioned glass composition has a viscosity of 100 dPa • sec be at least 0°C. In this case, devitrification tends not to be caused during glass formation and more homogeneous glass spacers can be manufactured with high yield. The temperature difference is more preferably at least 10°C, further preferably at least 20°C, and most preferably at least 30°C. The temperature at which the glass has a viscosity of 100 dPa·sec can be determined by, for example, a platinum ball pulling method. The devitrification temperature can be determined as, for example, the highest temperature among the temperatures of an electric furnace with temperature gradient at positions where crystals appeared when glass is heated with the electric furnace.

Furthermore, as the glass transition point of the glass spacer increases, the heat resistance thereof becomes higher and therefore the glass spacer becomes more difficult to be deformed in the processing accompanied by high-temperature heating. When the glass transition point is at least 550°C, the shape is not changed by high-temperature heating in a step of producing a display glass. Accordingly, the glass transition point of the glass composition is preferably at least 550°C, more preferably at least 580°C, and further preferably at least 600°C. The highest temperature value among the glass transition points of the glass composition within the aforementioned glass composition range is the upper limit of the glass transition point. The glass transition point can be determined by, for example, thermomechanical analysis (TMA).

The glass spacer becomes more difficult to be separated from a display substrate with a decrease in the difference between the average linear expansion coefficient of the glass spacer and the thermal expansion coefficient of a display glass substrate. Generally, the average linear expansion coefficient of the display glass substrate at 50 to 350°C is 80 to 90×10⁻⁷/°C. Accordingly, the lower limit of the average linear expansion coefficient of the glass spacer at 50 to 350°C is preferably at least 70×10⁻⁷/°C, more preferably at least 75×10⁻⁷/°C, and further preferably at least 80×10⁻⁷/°C. Moreover, the upper limit of the average linear expansion coefficient of the glass spacer at 50 to 350°C is preferably 100×10⁻⁷/°C or lower, more preferably 95×10⁻⁷/°C or lower, and further preferably 90×10⁻⁷/°C or lower. The average linear expansion coefficient can be determined by, for example, the thermomechanical analysis (TMA).

### <Young's modulus>

The glass spacer can provide an electron beam-excited display with sufficiently high mechanical strength as the Young's modulus thereof increases. The Young's modulus of the glass composition is preferably at least 85 GPa, more preferably at least 90 GPa, further preferably at least 95 GPa, and most preferably at least 100 GPa. The highest value among the Young's moduli of glass compositions within the aforementioned glass composition range is the upper limit of the Young's modulus. The Young's modulus can be determined by, for example, the ultrasonic method.

### <Volume resistivity>

Furthermore, in the glass spacer, excessively low volume resistivity results in excessive electron flow. On the other hand, when the volume resistivity is excessively high, the glass spacer tends to be electrically-charged. The lower limit of the volume resistivity of the glass spacer at 25°C is preferably at least 10¹¹ Ω·cm, more preferably at least 10¹² Ω·cm, further preferably at least 10¹³ Ω·cm, and most preferably at least 10¹⁴ Ω·cm. On the other hand, the upper limit of the volume resistivity of the glass spacer at 25°C is preferably 10¹⁶ Ω·cm or lower and more preferably 10¹⁵ Ω·cm or lower. The volume resistivity can be determined by, for example, the three terminal method according to JIS C 2141 (1992).

### [Method of manufacturing glass spacer]

A glass spacer of the present invention can be manufactured using the aforementioned glass composition, by a known method such as the redraw method or the direct spinning method. Particularly, the direct spinning method is suitable from the viewpoints of formability of the aforementioned glass composition and dimensional accuracy of a resultant spacer. Specifically, a preform can be produced first by melting a glass material composed of the aforementioned glass composition in a refractory container provided with a nozzle and drawing the molten glass material directly through the nozzle. Thereafter, the preform is cut precisely into a predetermined length and thereby a glass spacer is obtained.

Since the aforementioned glass composition has excellent formability, this manufacturing method can achieve a higher yield than that of a conventional manufacturing method. Furthermore, the resultant glass spacer tends not to cause electric-field breakdown when used for an electron beam-excited display.

### [Shape of glass spacer]

The glass spacer according to the present invention is particularly suitable for electron beam-excited displays. The shape thereof is not particularly limited and can be a columnar shape or a flat plate shape. The shape of the glass spacer according to the present invention is preferably a columnar shape (see the glass spacer 5 shown in FIG. 1(a)).

### [Electron beam-excited display]

An electron beam-excited display of the present invention includes a vacuum container as well as electron-emitting elements and glass spacers that are disposed inside the vacuum container, with the glass spacers being formed of the aforementioned glass composition. Specifically, the electron beam-excited display of the present invention can be configured, with, for example, the glass spacers 5 of the electron beam-excited display having the configuration shown in FIG. 2 being replaced by glass spacers formed of the aforementioned glass composition. In such an electron beam-excited display, the electric-field breakdown tends not to occur.

Hereinafter, the present invention is described in further detail using Examples 1 to 21 and Comparative Examples 1 to 18.

### Examples 1 to 21 and Comparative Examples 1 to 18

Common glass raw materials such as silica sand were mixed together in such a manner that the compositions indicated in Tables 1A, 2A, 3A, 4A, and 5A, respectively, were obtained, and thereby batches of the respective examples and comparative examples were prepared. Each of the batches was melted by heating it to 1200~1500°C, using an electric furnace and maintained in that condition for approximately four hours until the composition was homogenized. Thereafter, the molten glass was poured onto an iron plate and was cooled gradually in the electric furnace to normal temperature. Thus, a glass sample was obtained. All values of the glass compositions indicated in the tables are indicated in "mass%".

On the other hand, the respective compositions of Examples 1 to 21 and Comparative Examples 1 to 18 are indicated in "mol%" in Tables 1B, 2B, 3B, 4B, and 5B. These examples were conceived based on the compositions indicated in mol%. In prior art documents, however, many glass compositions are indicated in mass% (wt%). Accordingly, with consideration given to ease of comparison therewith, the present specification is based on the indication in mass%. Compositions indicated in mol% would allow the intentions of these examples to be understood easily.

With respect to each glass thus produced, the average linear expansion coefficient and glass transition point thereof were determined from a thermal expansion curve. Furthermore, the velocities of longitudinal wave and transverse wave that propagate in the glass were determined by a sing-around method, while the Young's modulus was determined from the glass density measured by the Archimedes method. Furthermore, the relationship between the viscosity and temperature was examined by the common platinum ball pulling method, and from this result, the temperature at which the glass had a viscosity of 100 dPa • sec was determined. Thereafter, glass pulverized into a particle size of 1.0 mm to 2.8 mm was placed in a platinum boat and was heated for two hours in an electric furnace with temperature gradient (900°C to 1400°C), and thereby the devitrification temperature was determined from the highest temperature of the parts of the electric furnace corresponding to the positions where crystals appeared. The volume resistivity was determined by a three terminal method according to JIS C 2141 (1992).

These measurement results are indicated together in Tables 1A, 2A, 3A, 4A, and 5A.

**[Table 1A]**

| Composition [mass%] | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| SiO₂ | 32.84 | 36.38 | 29.33 | 29.60 | 32.35 | 30.38 | 30.85 | 30.10 | 28.46 |
| B₂O₃ | 12.45 | 8.62 | 16.25 | 18.34 | 13.49 | 12.47 | 12.87 | 12.56 | 11.87 |
| Al₂O₃ | 7.03 | 7.07 | 7.00 | 4.21 | 6.59 | 7.04 | 6.29 | 6.14 | 5.80 |
| SiO₂+B₂O₃+Al₂O₃ | 52.32 | 52.07 | 52.58 | 52.15 | 52.43 | 49.89 | 50.01 | 48.80 | 46.13 |
| MgO | 2.25 | 2.26 | 2.23 | 2.25 | - | 2.25 | - | - | - |
| CaO | 22.62 | 22.74 | 22.50 | 22.71 | 15.35 | 25.01 | 14.64 | 14.28 | 7.06 |
| SrO | 5.04 | 5.07 | 5.01 | 5.06 | 15.55 | 5.05 | 5.16 | - | 11.91 |
| BaO | - | - | - | - | - | - | 14.31 | 21.43 | 20.26 |
| SrO+BaO | 5.04 | 5.07 | 5.01 | 5.06 | 15.55 | 5.05 | 19.47 | 21.43 | 32.17 |
| MgO+CaO+SrO+BaO | 29.91 | 30.07 | 29.74 | 30.02 | 30.90 | 32.31 | 34.11 | 35.71 | 39.23 |
| ZnO | 1.16 | 1.16 | 1.15 | 1.16 | 1.08 | 1.16 | 1.03 | 1.01 | 0.95 |
| ZrO₂ | 0.94 | 0.95 | 0.94 | 0.95 | 0.89 | 0.95 | 0.84 | 0.82 | 0.78 |
| La₂O₃ | 8.99 | 9.04 | 8.94 | 9.02 | 8.43 | 9.01 | 8.04 | 7.84 | 7.41 |
| Y₂O₃ | - | - | - | - | - | - | - | - | - |
| TiO₂ | - | - | - | - | - | - | - | - | - |
| Fe₂O₃ | 6.68 | 6.71 | 6.64 | 6.70 | 6.26 | 6.69 | 5.97 | 5.82 | 5.51 |
| Nb₂O₅ | - | - | - | - | - | - | - | - | - |
| Ta₂O₅ | - | - | - | - | - | - | - | - | - |
| TiO₂+Fe₂O₃+Nb₂O₅+ Ta₂O₅ | 6.68 | 6.71 | 6.64 | 6.70 | 6.26 | 6.69 | 5.97 | 5.82 | 5.51 |
| Young's modulus [GPa] Average linear | 100 | 99 | 100 | 101 | 96 | 99 | 92 | 91 | 89 |
| expansion coefficient [×10⁻⁷/°C] | 77 | 76 | 77 | 77 | 78 | 80 | 76 | 78 | 82 |
| Glass transition point [°C] | 650 | 664 | 649 | 641 | 639 | 648 | 645 | 642 | 635 |
| Devitrification temperature [°C] | 985 | 1097 | 959 | 917 | 957 | 1012 | 995 | 1035 | 1029 |
| Temperature at 100 dPa·sec [°C] | 1041 | 1102 | 987 | 961 | 1040 | 1030 | 1047 | 1050 | 1059 |
| Difference between temperature at 100 dPa·sec and devitrification temperature [°C] | 56 | 5 | 28 | 44 | 83 | 18 | 52 | 15 | 30 |
| Volume resistivity (25 °C) [Ω·cm] | 2.2E+14 | 9.5E+13 | 8.2E+14 | 1.6E+15 | 6.5E+14 | 4.1E+14 | 3.8E+14 | 4.4E+14 | 4.7E+14 |

**[Table 1B]**

| Composition [mol%] | Ex. 1 | Ex. 2 | Ex. 3 | Ex. 4 | Ex. 5 | Ex. 6 | Ex. 7 | Ex. 8 | Ex. 9 |
|---|---|---|---|---|---|---|---|---|---|
| SiO₂ | 39.22 | 43.22 | 35.22 | 35.22 | 41.22 | 37.22 | 41.22 | 41.22 | 41.22 |
| B₂O₃ | 12.84 | 8.84 | 16.84 | 18.84 | 14.84 | 12.84 | 14.84 | 14.84 | 14.84 |
| Al₂O₃ | 4.95 | 4.95 | 4.95 | 2.95 | 4.95 | 4.95 | 4.95 | 4.95 | 4.95 |
| SiO₂+B₂O₃+Al₂O₃ | 57.01 | 57.01 | 57.01 | 57.01 | 61.01 | 55.01 | 61.01 | 61.01 | 61.01 |
| MgO | 4.00 | 4.00 | 4.00 | 4.00 | - | 4.00 | - | - | - |
| CaO | 28.95 | 28.95 | 28.95 | 28.95 | 20.95 | 30.95 | 20.95 | 20.95 | 10.95 |
| SrO | 3.49 | 3.49 | 3.49 | 3.49 | 11.49 | 3.49 | 4.00 | - | 10.00 |
| BaO | - | - | - | - | - | - | 7.49 | 11.49 | 11.49 |
| SrO+BaO | 3.49 | 3.49 | 3.49 | 3.49 | 11.49 | 3.49 | 11.49 | 11.49 | 21.49 |
| MgO+CaO+SrO+BaO | 36.44 | 36.44 | 36.44 | 36.44 | 32.44 | 38.44 | 32.44 | 32.44 | 32.44 |
| ZnO | 1.02 | 1.02 | 1.02 | 1.02 | 1.02 | 1.02 | 1.02 | 1.02 | 1.02 |
| ZrO₂ | 0.55 | 0.55 | 0.55 | 0.55 | 0.55 | 0.55 | 0.55 | 0.55 | 0.55 |
| La₂O₃ | 1.98 | 1.98 | 1.98 | 1.98 | 1.98 | 1.98 | 1.98 | 1.98 | 1.98 |
| Y₂O₃ | - | - | - | - | - | - | - | - | - |
| TiO₂ | - | - | - | - | - | - | - | - | - |
| Fe₂O₃ | 3.00 | 3.00 | 3.00 | 3.00 | 3.00 | 3.00 | 3.00 | 3.00 | 3.00 |
| Nb₂O₅ | - | - | - | - | - | - | - | - | - |
| Ta₂O₅ | - | - | - | - | - | - | - | - | - |
| TiO₂+Fe₂O₃+Nb₂O₅+ Ta₂O₅ | 3.00 | 3.00 | 3.00 | 3.00 | 3.00 | 3.00 | 3.00 | 3.00 | 3.00 |

**[Table 2A]**

| Composition [mass%] | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|
| SiO₂ | 32.95 | 33.01 | 34.76 | 32.45 | 32.78 | 28.74 | 32.36 | 31.98 | 35.50 |
| B₂O₃ | 12.50 | 12.52 | 13.35 | 12.31 | 12.43 | 21.20 | 12.27 | 12.13 | 12.81 |
| Al₂O₃ | 7.06 | 7.07 | 7.54 | 6.95 | 7.02 | - | 6.93 | 6.85 | 7.23 |
| SiO₂+B₂O₃+Al₂O₃ | 52.51 | 52.60 | 55.65 | 51.71 | 52.23 | 49.94 | 51.56 | 50.96 | 55.54 |
| MgO | 2.25 | 2.26 | 2.41 | 2.22 | 2.24 | 2.25 | 2.21 | 2.19 | 2.31 |
| CaO | 23.51 | 23.17 | 25.92 | 21.97 | 22.20 | 22.70 | 21.91 | 21.65 | 23.27 |
| SrO | 5.06 | 5.07 | 5.40 | 4.98 | 5.03 | 5.06 | 4.97 | 4.91 | 5.18 |
| BaO | - | - | - | - | - | - | - | - | - |
| SrO+BaO | 5.06 | 5.07 | 5.40 | 4.98 | 5.03 | 5.06 | 4.97 | 4.91 | 5.18 |
| MgO+CaO+SrO+BaO | 30.82 | 30.50 | 33.73 | 29.17 | 29.47 | 30.01 | 29.09 | 28.75 | 30.76 |
| ZnO | - | 1.16 | 1.24 | 1.14 | 1.15 | 1.16 | 1.14 | 1.13 | 1.19 |
| ZrO₂ | 0.95 | - | 1.01 | 0.93 | 0.94 | 0.95 | 0.93 | 0.92 | 0.97 |
| La₂O₃ | 9.02 | 9.04 | - | 8.88 | 8.98 | 9.02 | 8.86 | 8.75 | 9.25 |
| Y₂O₃ | - | - | - | 1.55 | - | - | - | - | - |
| TiO₂ | - | - | - | - | 0.56 | - | - | - | - |
| Fe₂O₃ | 6.70 | 6.71 | 8.35 | 6.60 | 6.66 | 8.93 | 6.58 | 6.50 | 2.29 |
| Nb₂O₅ | - | - | - | - | - | - | 1.83 | - | - |
| Ta₂O₅ | - | - | - | - | - | - | - | 3.00 | - |
| TiO₂+Fe₂O₃+Nb₂O₅+ Ta₂O₅ | 6.70 | 6.71 | 8.35 | 6.60 | 7.22 | 8.93 | 8.41 | 9.50 | 2.29 |
| Young's modulus [GPa] Average linear | 99 | 99 | 99 | 100 | 100 | 103 | 99 | 99 | 98 |
| expansion coefficient [×10⁻⁷°C] | 81 | 78 | 77 | 78 | 76 | 80 | 77 | 78 | 76 |
| Glass transition point [°C] | 653 | 644 | 644 | 650 | 652 | 634 | 644 | 652 | 645 |
| Devitrification temperature [°C] | 1031 | 1020 | 1026 | 1005 | 1013 | 908 | 1002 | 1012 | 1010 |
| Temperature at 100 dPa·sec [°C] | 1037 | 1036 | 1034 | 1038 | 1038 | 931 | 1036 | 1039 | 1063 |
| Difference between temperature at 100 dPa·sec and devitrification temperature [°C] | 6 | 16 | 8 | 33 | 25 | 23 | 34 | 27 | 53 |
| Volume resistivity (25 °C) [Ω·cm] | 2.5E+14 | 2.1E+14 | 1.4E+14 | 2.8E+14 | 2.7E+14 | 2.0E+15 | 3.0E+14 | 4.4E+14 | 1.3E+15 |

**[Table 2B]**

| Composition [mol%] | Ex. 10 | Ex. 11 | Ex. 12 | Ex. 13 | Ex. 14 | Ex. 15 | Ex. 16 | Ex. 17 | Ex. 18 |
|---|---|---|---|---|---|---|---|---|---|
| SiO₂ | 39.22 | 39.22 | 38.72 | 39.22 | 39.22 | 34.22 | 39.22 | 39.22 | 41.22 |
| B₂O₃ | 12.84 | 12.84 | 12.84 | 12.84 | 12.84 | 21.79 | 12.84 | 12.84 | 12.84 |
| Al₂O₃ | 4.95 | 4.95 | 4.95 | 4.95 | 4.95 | - | 4.95 | 4.95 | 4.95 |
| SiO₂+B₂O₃+Al₂O₃ | 57.01 | 57.01 | 56.51 | 57.01 | 57.01 | 56.01 | 57.01 | 57.01 | 59.01 |
| MgO | 4.00 | 4.00 | 4.00 | 4.00 | 4.00 | 4.00 | 4.00 | 4.00 | 4.00 |
| CaO | 29.97 | 29.50 | 30.93 | 28.45 | 28.45 | 28.95 | 28.45 | 28.45 | 28.95 |
| SrO | 3.49 | 3.49 | 3.49 | 3.49 | 3.49 | 3.49 | 3.49 | 3.49 | 3.49 |
| BaO | - | - | - | - | - | - | - | - | - |
| SrO+BaO | 3.49 | 3.49 | 3.49 | 3.49 | 3.49 | 3.49 | 3.49 | 3.49 | 3.49 |
| MgO+CaO+SrO+BaO | 37.46 | 36.99 | 38.42 | 35.94 | 35.94 | 36.44 | 35.94 | 35.94 | 36.44 |
| ZnO | - | 1.02 | 1.02 | 1.02 | 1.02 | 1.02 | 1.02 | 1.02 | 1.02 |
| ZrO₂ | 0.55 | - | 0.55 | 0.55 | 0.55 | 0.55 | 0.55 | 0.55 | 0.55 |
| La₂O₃ | 1.98 | 1.98 | - | 1.98 | 1.98 | 1.98 | 1.98 | 1.98 | 1.98 |
| Y₂O₃ | - | - | - | 0.50 | - | - | - | - | - |
| TiO₂ | - | - | - | - | 0.50 | - | - | - | - |
| Fe₂O₃ | 3.00 | 3.00 | 3.50 | 3.00 | 3.00 | 4.00 | 3.00 | 3.00 | 1.00 |
| Nb₂O₅ | - | - | - | - | - | - | 0.50 | - | - |
| Ta₂O₅ | - | - | - | - | - | - | - | 0.50 | - |
| TiO₂+Fe₂O₃+Nb₂O₅+ 3.00 Ta₂O₅ | | 3.00 | 3.50 | 3.00 | 3.50 | 4.00 | 3.50 | 3.50 | 1.00 |

**[Table 3A]**

| Composition [mass%] | Ex. 19 | Ex.. 20 | Ex. 21 |
|---|---|---|---|
| SiO₂ | 34.15 | 31.56 | 27.48 |
| B₂O₃ | 12.63 | 12.28 | 15.78 |
| Al₂O₃ | 7.13 | 6.94 | 5.82 |
| SiO₂+B₂O₃+Al₂O₃ | 53.91 | 50.78 | 49.08 |
| MgO | 2.28 | 2.22 | - |
| CaO | 22.94 | 22.31 | 20.44 |
| SrO | 5.11 | 4.97 | 0.19 |
| BaO | - | - | 12.96 |
| SrO+BaO | 5.11 | 4.97 | 13.15 |
| MgO+CaO+SrO+BaO | 30.33 | 29.50 | 33.59 |
| ZnO | 1.17 | 1.14 | - |
| ZrO₂ | 0.96 | 0.93 | - |
| La₂O₃ | 9.12 | 8.87 | 6.18 |
| Y₂O₃ | - | - | - |
| TiO₂ | - | - | - |
| Fe₂O₃ | 4.51 | 8.78 | 11.16 |
| Nb₂O₅ | - | - | - |
| Ta₂O₅ | - | - | - |
| TiO₂+Fe₂O₃+Nb₂O₅+ Ta₂O₅ | 4.51 | 8.78 | 11.16 |
| Young's modulus [GPa] Average linear | 99 | 100 | 94 |
| expansion coefficient [×110⁻⁷/°C] | 76 | 79 | 83 |
| Glass transition point [°C] | 656 | 648 | 621 |
| Devitrification temperature [°C] | 1002 | 984 | 982 |
| Temperature at 100 dPa·sec [°C] | 1045 | 1034 | 1016 |
| Difference between temperature at 100 dPa·sec and devitrification temperature [°C] | 43 | 50 | 34 |
| Volume resistivity (25°C) [Ω·cm] | 5.1E+14 | 1.1E+14 | 4.0E+14 |

**[Table 3B]**

| Composition [mol%] | Ex. 19 | Ex.. 20 | Ex. 21 |
|---|---|---|---|
| SiO₂ | 40.22 | 38.22 | 35.68 |
| B₂O₃ | 12.84 | 12.84 | 17.69 |
| Al₂O₃ | 4.95 | 4.95 | 4.45 |
| SiO₂+B₂O₃+Al₂O₃ | 58.01 | 56.01 | 57.82 |
| MgO | 4.00 | 4.00 | - |
| CaO | 28.95 | 28.95 | 28.43 |
| SrO | 3.49 | 3.49 | 0.14 |
| BaO | - | - | 6.59 |
| SrO+BaO | 3.49 | 3.49 | 6.73 |
| MgO+CaO+SrO+BaO | 36.44 | 36.44 | 35.16 |
| ZnO | 1.02 | 1.02 | - |
| ZrO₂ | 0.55 | 0.55 | - |
| La₂O₃ | 1.98 | 1.98 | 1.48 |
| Y₂O₃ | - | - | - |
| TiO₂ | - | - | - |
| Fe₂O₃ | 2.00 | 4.00 | 5.45 |
| Nb₂O₅ | - | - | - |
| Ta₂O₅ | - | - | - |
| TiO₂+Fe₂O₃+Nb₂O₅+ Ta₂O₅ | 2.00 | 4.00 | 5.45 |

**[Table 4A]**

| Composition [mass%] | C.Ex. 1 | C.Ex. 2 | C.Ex. 3 | C.Ex. 4 | C.Ex. 5 | C.Ex. 6 | C.Ex. 7 | C.Ex. 8 | C.Ex. 9 |
|---|---|---|---|---|---|---|---|---|---|
| SiO₂ | 28.43 | 21.08 | 46.64 | 28.96 | 34.98 | 20.25 | 33.60 | 27.28 | 25.47 |
| B₂O₃ | - | - | - | - | 5.48 | 11.49 | 13.08 | 10.62 | 10.18 |
| Al₂O₃ | 12.68 | - | - | - | 6.80 | 22.22 | 7.39 | 6.00 | 5.75 |
| SiO₂+B₂O₃+Al₂O₃ | 41.11 | 21.08 | 46.64 | 28.96 | 47.26 | 53.96 | 54.07 | 43.90 | 41.40 |
| MgO | 5.34 | - | - | - | 1.09 | 2.07 | 18.87 | 1.92 | - |
| CaO | - | - | - | 5.07 | 21.87 | 20.87 | 0.78 | 3.30 | 13.38 |
| SrO | - | - | 24.75 | 9.37 | 10.46 | 4.65 | 5.29 | 33.84 | - |
| BaO | - | 47.84 | - | 27.73 | - | - | - | - | 27.06 |
| SrO+BaO | 0.00 | 47.84 | 24.75 | 37.10 | 10.46 | 4.65 | 5.29 | 33.84 | 27.06 |
| MgO+CaO+SrO+ BaO | 5.34 | 47.84 | 24.75 | 42.17 | 33.42 | 27.59 | 24.94 | 39.06 | 40.44 |
| ZnO | 1.48 | - | - | - | 1.12 | 1.07 | 1.21 | 0.99 | 0.95 |
| Li₂O | 1.30 | - | - | - | - | - | - | - | - |
| ZrO₂ | - | - | - | - | 0.91 | 0.87 | 0.99 | 0.81 | 0.77 |
| La₂O₃ | 28.66 | - | - | - | 8.69 | 8.29 | 9.44 | 7.66 | 7.35 |
| Y₂O₃ | 3.88 | - | - | - | - | - | - | - | - |
| TiO₂ | - | - | - | 28.88 | - | - | - | - | - |
| Fe₂O₃ | 18.24 | - | 28.61 | - | 8.61 | 8.21 | 9.35 | 7.59 | 9.09 |
| Nb₂O₅ | - | 31.09 | - | - | - | - | - | - | - |
| Ta₂O₅ | - | - | - | - | - | - | - | - | - |
| TiO₂+Fe₂O₃+Nb₂O₅+ Nb₂O₅ | 18.24 | 31.09 | 28.61 | 28.88 | 8.61 | 8.21 | 9.35 | 7.59 | 9.09 |
| Young's modulus [GPa] | 110 | 87 | 89 | 98 | 99 | 99 | 105 | 94 | 90 |
| Average linear expansion coefficient [×10⁻⁷/°C] | 71 | 89 | 67 | 86 | 82 | 72 | 62 | 85 | 88 |
| Glass transition point [°C] | 661 | 800 | 630 | 760 | 665 | 644 | 648 | 634 | 619 |
| Devitrification temperature [°C] | 1363 | 1216 | 1399 | 1216 | 1133 | 1166 | 1206 | 1076 | 1165 |
| Temperature at 100 dPa·sec [°C] | 1268 | 1139 | 1254 | 1084 | 1130 | 1081 | 1078 | 1064 | 1042 |
| Difference between temperature at 100 dPa·sec and devitrification temperature [°C] | -95 | -77 | -145 | -132 | -3 | -85 | -128 | -12 | -123 |
| Volume resistivity (25°C) [Ω·cm] | 8.6E+11 | >1.0E+16 | 3.9E+10 | 1.5E+15 | 3.5E+13 | 5.8E+14 | 2.8E+13 | 1.2E+14 | 6.8E+13 |

**[Table 4B]**

| Composition [mol%] | C.Ex. 1 | C.Ex. 2 | C.Ex. 3 | C.Ex. 4 | C.Ex. 5 | C.Ex. 6 | C.Ex. 7 | C.Ex. 8 | C.Ex. 9 |
|---|---|---|---|---|---|---|---|---|---|
| SiO₂ | 46.80 | 45.00 | 65.00 | 40.00 | 43.22 | 26.22 | 38.22 | 38.22 | 37.22 |
| B₂O₃ | - | - | - | - | 5.84 | 12.84 | 12.84 | 12.84 | 12.84 |
| Al₂O₃ | 12.30 | - | - | - | 4.95 | 16.95 | 4.95 | 4.95 | 4.95 |
| SiO₂+B₂O₃+Al₂O₃ | 59.10 | 45.00 | 65.00 | 40.00 | 54.01 | 56.01 | 56.01 | 56.01 | 55.01 |
| MgO | 13.10 | - | - | - | 2.00 | 4.00 | 32.00 | 4.00 | - |
| CaO | - | - | - | 7.50 | 28.95 | 28.95 | 0.95 | 4.95 | 20.95 |
| SrO | - | - | 20.00 | 7.50 | 7.49 | 3.49 | 3.49 | 27.49 | - |
| BaO | - | 40.00 | - | 15.00 | - | - | - | - | 15.49 |
| SrO+BaO | 0.00 | 40.00 | 20.00 | 22.50 | 7.49 | 3.49 | 3.49 | 27.49 | 15.49 |
| MgO+CaO+SrO+BaO | 13.10 | 40.00 | 20.00 | 30.00 | 38.44 | 36.44 | 36.44 | 36.44 | 36.44 |
| ZnO | 1.80 | - | - | - | 1.02 | 1.02 | 1.02 | 1.02 | 1.02 |
| Li₂O | 4.30 | - | - | - | - | - | - | - | - |
| ZrO₂ | - | - | - | - | 0.55 | 0.55 | 0.55 | 0.55 | 0.55 |
| La₂O₃ | 8.70 | - | - | - | 1.98 | 1.98 | 1.98 | 1.98 | 1.98 |
| Y₂O₃ | 1.70 | - | - | - | - | - | - | - | - |
| TiO₂ | - | - | - | 30.00 | - | - | - | - | - |
| Fe₂O₃ | 11.30 | - | 15.00 | - | 4.00 | 4.00 | 4.00 | 4.00 | 5.00 |
| Nb₂O₅ | - | 15.00 | - | - | - | - | - | - | - |
| Ta₂O₅ | - | - | - | - | - | - | - | - | - |
| TiO₂+Fe₂O₃+Nb₂O₅+ Ta₂O₅ | 11.30 | 15.00 | 15.00 | 30.00 | 4.00 | 4.00 | 4.00 | 4.00 | 5.00 |

**[Table 5A]**

| Composition [mass%] | C.Ex. 10 | C.Ex. 11 | C.Ex. 12 | C.Ex. 13 | C.Ex. 14 | C.Ex. 15 | C.Ex. 16 | C.Ex. 17 | C.Ex. 18 |
|---|---|---|---|---|---|---|---|---|---|
| SiO₂ | 31.94 | 30.30 | 29.39 | 27.48 | 28.87 | 30.37 | 24.59 | 28.30 | 25.71 |
| B₂O₃ | 12.76 | 11.79 | 11.44 | 10.70 | 11.23 | 11.82 | 11.35 | 11.01 | 10.01 |
| Al₂O₃ | 7.21 | 6.66 | 6.46 | 6.04 | 6.34 | 6.67 | 6.41 | 6.22 | 5.65 |
| SiO₂+B₂O₃+Al₂O₃ | 51.91 | 48.75 | 47.29 | 44.22 | 46.44 | 48.86 | 42.35 | 45.53 | 41.37 |
| MgO | 2.30 | 2.13 | 2.06 | 1.93 | 2.03 | 2.13 | 2.05 | 1.99 | 1.81 |
| CaO | 27.58 | 12.54 | 15.04 | 16.75 | 17.59 | 12.57 | 20.62 | 17.24 | 16.92 |
| SrO | - | 4.77 | 4.63 | 4.33 | 4.55 | 4.78 | 4.59 | 4.46 | 4.05 |
| BaO | - | - | - | - | - | - | - | - | - |
| SrO+BaO | 0.00 | 4.77 | 4.63 | 4.33 | 4.55 | 4.78 | 4.59 | 4.46 | 4.05 |
| MgO+CaO+SrO+BaO | 29.88 | 19.44 | 21.73 | 23.01 | 24.17 | 19.48 | 27.26 | 23.69 | 22.78 |
| ZnO | 1.19 | 13.98 | 1.06 | 0.99 | 1.04 | 1.10 | 1.05 | 1.02 | 0.93 |
| Li₂O | - | - | - | - | - | - | - | - | - |
| ZrO₂ | 0.97 | 0.89 | 13.48 | 0.81 | 0.85 | 0.90 | 0.86 | 0.84 | 0.76 |
| La₂O₃ | 9.21 | 8.51 | 8.26 | 23.32 | 8.11 | 8.53 | 8.19 | 7.95 | 7.22 |
| Y₂O₃ | - | - | - | - | 11.36 | - | - | - | - |
| TiO₂ | - | - | - | - | - | 12.68 | - | - | - |
| Fe₂O₃ | 6.84 | 8.43 | 8.18 | 7.65 | 8.03 | 8.45 | 20.28 | 7.87 | 7.15 |
| Nb₂O₅ | - | - | - | - | - | - | - | 13.10 | - |
| Ta₂O₅ | - | - | - | - | - | - | - | - | 19.79 |
| TiO₂+Fe₂O₃+Nb₂O₅+ Nb₂O₅ | 6.84 | 8.43 | 8.18 | 7.65 | 8.03 | 21.13 | 20.28 | 20.97 | 26.94 |
| Young's modulus [GPa] Average linear | 101 | 98 | 104 | 103 | 104 | 103 | 106 | 102 | 105 |
| expansion coefficient [×10⁻⁷/°C] | 80 | 67 | 67 | 79 | 78 | 69 | 83 | 73 | 72 |
| Glass transition point [°C] | 647 | 612 | 653 | 653 | 659 | 637 | 610 | 641 | 653 |
| Devitrification temperature [°C] | 1046 | 1093 | 1280 | 1120 | 1092 | 1107 | 1163 | 1119 | 1195 |
| Temperature at 100 dPa·sec [°C] | 1028 | 1070 | 1077 | 1042 | 1037 | 1042 | 979 | 1080 | 1065 |
| Difference between temperature at 100 dPa·sec and devitrification temperature [°C] | -18 | -23 | -203 | -78 | -55 | -65 | -184 | -40 | -130 |
| Volume resistivity (25 °C) [Ω · cm] | 3.4E+14 | 6.4E+14 | 1.0E+15 | 4.5E+14 | 1.5E+14 | 2.6E+14 | 4.0E+12 | 2.0E+14 | 9.5E+13 |

**[Table 5B]**

| Composition [mol%] | C.Ex. 10 | C.Ex. 11 | C.Ex. 12 | C.Ex. 13 | C.Ex. 14 | C.Ex. 15 | C.Ex. 16 | C.Ex. 17 | C.Ex. 18 |
|---|---|---|---|---|---|---|---|---|---|
| SiO₂ | 37.22 | 38.22 | 38.22 | 38.22 | 38.22 | 38.22 | 32.22 | 38.22 | 38.22 |
| B₂O₃ | 12.84 | 12.84 | 12.84 | 12.84 | 12.84 | 12.84 | 12.84 | 12.84 | 12.84 |
| Al₂O₃ | 4.95 | 4.95 | 4.95 | 4.95 | 4.95 | 4.95 | 4.95 | 4.95 | 4.95 |
| SiO₂+B₂O₃+Al₂O₃ | 55.01 | 56.01 | 56.01 | 56.01 | 56.01 | 56.01 | 50.01 | 56.01 | 56.01 |
| MgO | 4.00 | 4.00 | 4.00 | 4.00 | 4.00 | 4.00 | 4.00 | 4.00 | 4.00 |
| CaO | 34.44 | 16.95 | 20.95 | 24.95 | 24.95 | 16.95 | 28.95 | 24.95 | 26.95 |
| SrO | - | 3.49 | 3.49 | 3.49 | 3.49 | 3.49 | 3.49 | 3.49 | 3.49 |
| BaO | - | - | - | - | - | - | - | - | - |
| SrO+BaO | 0.00 | 3.49 | 3.49 | 3.49 | 3.49 | 3.49 | 3.49 | 3.49 | 3.49 |
| MgO+CaO+SrO+BaO | 38.44 | 24.44 | 28.44 | 32.44 | 32.44 | 24.44 | 36.44 | 32.44 | 34.44 |
| ZnO | 1.02 | 13.02 | 1.02 | 1.02 | 1.02 | 1.02 | 1.02 | 1.02 | 1.02 |
| Li₂O | - | - | - | - | - | - | - | - | - |
| ZrO₂ | 0.55 | 0.55 | 8.55 | 0.55 | 0.55 | 0.55 | 0.55 | 0.55 | 0.55 |
| La₂O₃ | 1.98 | 1.98 | 1.98 | 5.98 | 1.98 | 1.98 | 1.98 | 1.98 | 1.98 |
| Y₂O₃ | - | - | - | - | 4.00 | - | - | - | - |
| TiO₂ | - | - | - | - | - | 12.00 | - | - | - |
| Fe₂O₃ | 3.00 | 4.00 | 4.00 | 4.00 | 4.00 | 4.00 | 10.00 | 4.00 | 4.00 |
| Nb₂O₅ | - | - | - | - | - | - | - | 4.00 | - |
| Ta₂O₅ | - | - | - | - | - | - | - | - | 2.00 |
| TiO₂+Fe₂O₃+Nb₂O₅ Ta₂O₅ | 3.00 | 4.00 | 4.00 | 4.00 | 4.00 | 16.00 | 10.00 | 8.00 | 6.00 |

The glass produced in Example 1 has a composition containing SiO₂, B₂O₃, and Al₂O₃ as glass skeleton components, MgO, CaO, and SrO as alkaline earth metal oxides, and further ZnO, ZrO₂, La₂O₃, and Fe₂O₃.

The glasses produced in Examples 2, 3, and 4 each have a composition obtained by adjusting the contents of SiO₂, B₂O₃, and Al₂O₃ used in Example 1.

The glasses produced in Examples 5, 6, 7, 8, and 9 each have a composition obtained by adjusting the contents of SiO₂, B₂O₃, and alkaline earth metal oxides of the glass according to Example 1.

The glass produced in Example 10 has a composition obtained by excluding ZnO from the glass of Example 1. Furthermore, the glass produced in Example 11 has a composition obtained by excluding ZrO₂ from the glass of Example 1. Moreover, the glass produced in Example 12 has a composition obtained by excluding La₂O₃ from the glass of Example 1 and adjusting the contents of SiO₂ and Fe₂O₃ of the glass of Example 1.

The glass produced in Example 13 has a composition containing Y₂O₃ added to the glass of Example 1. Furthermore, the glass produced in Example 14 has a composition containing TiO₂ added to the glass of Example 1.

The glass produced in Example 15 has a composition obtained by adjusting the contents of SiO₂, B₂O₃, Al₂O₃, and Fe₂O₃ used in Example 1.

The glass produced in Example 16 has a composition containing Nb₂O₅ added to the glass of Example 1. Furthermore, the glass produced in Example 17 has a composition containing Ta₂O₅ added to the glass of Example 1.

The glasses produced in Examples 18, 19, and 20 each have a composition obtained by adjusting the content of Fe₂O₃ of the glass according to Example 1. The volume resistivities were 1.1×10¹⁴ Ω·cm to 1.3×10¹⁵ Ω·cm at 25°C. This indicates that an increase in the content of Fe₂O₃ results in a decrease in the volume resistivity.

The glass produced in Example 21 has a composition containing SiO₂, B₂O₃, Al₂O₃ as glass skeleton components, CaO, SrO, and BaO as alkaline earth metal oxides, and further La₂O₃ and Fe₂O₃.

The glass produced in Comparative Example 1 has a composition obtained by excluding V₂O₅ from the glass composition described in Example 4 in JP 2003-526187 A, which is a glass composition outside the scope of the present invention. The temperature difference obtained by subtracting the devitrification temperature of the glass from the temperature at which the glass had a viscosity of 100 dPa • sec was -95°C, which was lower than those of the examples according to the present invention.

The glass produced in Comparative Example 2 has the glass composition described in Example D in JP 2004-43288 A, which is a glass composition outside the scope of the present invention. The Young's modulus was 87 GPa, which was smaller than those of the examples according to the present invention. The temperature difference obtained by subtracting the devitrification temperature of the glass from the temperature at which the glass had a viscosity of 100 dPa • sec was -77°C, which was lower than those of the examples according to the present invention.

The glass produced in Comparative Example 3 has the glass composition described in Example 5 in JP 2004-71158 A, which is a glass composition outside the scope of the present invention. The average linear expansion coefficient was 67×10⁻⁷/ °C, which was smaller than those of the examples according to the present invention. Moreover, the temperature difference obtained by subtracting the devitrification temperature of the glass from the temperature at which the glass had a viscosity of 100 dPa • sec was -145°C, which was lower than those of the examples according to the present invention.

The glass produced in Comparative Example 4 has the glass composition described in Example 8 in JP 2005-263613 A, which is a glass composition outside the scope of the present invention. The temperature difference obtained by subtracting the devitrification temperature of the glass from the temperature at which the glass had a viscosity of 100 dPa • sec was -132°C, which was lower than those of the examples according to the present invention.

The glass produced in Comparative Example 5 is composed of a composition in which the B₂O₃ content is outside the range of the present invention. The temperature difference obtained by subtracting the devitrification temperature of the glass from the temperature at which the glass had a viscosity of 100 dPa • sec was -3°C, which was lower than those of the examples according to the present invention.

The glass produced in Comparative Example 6 is composed of a composition in which the Al₂O₃ content is outside the range of the present invention. The temperature difference obtained by subtracting the devitrification temperature of the glass from the temperature at which the glass had a viscosity of 100 dPa • sec was -85°C, which was lower than those of the examples according to the present invention.

The glass produced in Comparative Example 7 is composed of a composition in which the contents of MgO and CaO are outside the range of the present invention. The average linear expansion coefficient was 62×10⁻⁷/°C, which was smaller than those of the examples according to the present invention. Furthermore, the temperature difference obtained by subtracting the devitrification temperature of the glass from the temperature at which the glass had a viscosity of 100 dPa • sec was -128°C, which was lower than those of the examples according to the present invention.

The glass produced in Comparative Example 8 is composed of a composition in which the contents of (SiO₂+B₂O₃+Al₂O₃), CaO, and SrO are outside the range of the present invention. The temperature difference obtained by subtracting the devitrification temperature of the glass from the temperature at which the glass had a viscosity of 100 dPa • sec was -12°C, which was lower than those of the examples according to the present invention.

The glass produced in Comparative Example 9 is composed of a composition in which the contents of (SiO₂+B₂O₃+Al₂O₃) and BaO are outside the range of the present invention. The temperature difference obtained by subtracting the devitrification temperature of the glass from the temperature at which the glass had a viscosity of 100 dPa· sec was -123°C, which was lower than those of the examples according to the present invention.

The glass produced in Comparative Example 10 is composed of a composition in which the content of (SrO+BaO) is outside the range of the present invention. The temperature difference obtained by subtracting the devitrification temperature of the glass from the temperature at which the glass had a viscosity of 100 dPa· sec was -18°C, which was lower than those of the examples according to the present invention.

The glass produced in Comparative Example 11 is composed of a composition in which the contents of (MgO+CaO+SrO+BaO) and ZnO are outside the range of the present invention. The average linear expansion coefficient was 67×10⁻⁷/°C, which was smaller than those of the examples according to the present invention. Furthermore, the glass transition point was 612 °C, which was lower than those of the examples according to the present invention. Moreover, the temperature difference obtained by subtracting the devitrification temperature of the glass from the temperature at which the glass had a viscosity of 100 dPa· sec was -23°C, which was lower than those of the examples according to the present invention.

The glass produced in Comparative Example 12 is composed of a composition in which the content of ZrO₂ is outside the range of the present invention. The average linear expansion coefficient was 67×10⁻⁷/ °C, which was smaller than those of the examples according to the present invention. Furthermore, the temperature difference obtained by subtracting the devitrification temperature of the glass from the temperature at which the glass had a viscosity of 100 dPa· sec was -203°C, which was lower than those of the examples according to the present invention.

The glass produced in Comparative Example 13 is composed of a composition in which the contents of (SiO₂+B₂O₃+Al₂O₃) and La₂O₃ are outside the range of the present invention. The temperature difference obtained by subtracting the devitrification temperature of the glass from the temperature at which the glass had a viscosity of 100 dPa·sec was -78°C, which was lower than those of the examples according to the present invention.

The glass produced in Comparative Example 14 is composed of a composition in which the content of Y₂O₃ is outside the range of the present invention. The temperature difference obtained by subtracting the devitrification temperature of the glass from the temperature at which the glass had a viscosity of 100 dPa·sec was -55°C, which was lower than those of the examples according to the present invention.

The glass produced in Comparative Example 15 is composed of a composition in which the contents of (MgO+CaO+SrO+BaO), TiO₂, and (TiO₂+Fe₂O₃+Nb₂O₅+Ta₂O₅) are outside the range of the present invention. The average linear expansion coefficient was 69×10⁻⁷/°C, which was smaller than those of the examples according to the present invention. Furthermore, the temperature difference obtained by subtracting the devitrification temperature of the glass from the temperature at which the glass had a viscosity of 100 dPa·sec was -65°C, which was lower than those of the examples according to the present invention.

The glass produced in Comparative Example 16 is composed of a composition in which the contents of (SiO₂+B₂O₃+Al₂O₃), Fe₂O₃ and (TiO₂+ Fe₂O₃+Nb₂O₅+Ta₂O₅) are outside the range of the present invention. The temperature difference obtained by subtracting the devitrification temperature of the glass from the temperature at which the glass had a viscosity of 100 dPa·sec was -184°C, which was lower than those of the examples according to the present invention.

The glass produced in Comparative Example 17 is composed of a composition in which the contents of Nb₂O₅ and (TiO₂+Fe₂O₃+Nb₂O₅+Ta₂O₅) are outside the range of the present invention. The temperature difference obtained by subtracting the devitrification temperature of the glass from the temperature at which the glass had a viscosity of 100 dPa·sec was -40°C, which was lower than those of the examples according to the present invention.

The glass produced in Comparative Example 18 is composed of a composition in which the contents of (SiO₂+B₂O₅+Al₂O₃), Ta₂O₅, and (TiO₂+Fe₂O₃+Nb₂O₅+Ta₂O₅) are outside the range of the present invention. The temperature difference obtained by subtracting the devitrification temperature of the glass from the temperature at which the glass had a viscosity of 100 dPa·sec was -130°C, which was lower than those of the examples according to the present invention.

As described above, in each glass produced in the aforementioned comparative examples, the temperature difference obtained by subtracting the devitrification temperature of the glass from the temperature at which the glass had a viscosity of 100 dPa·sec is small and a minus value. However, in each glass produced in the aforementioned examples, the temperature difference is at least 0°C. Accordingly, it is proved that the glasses produced in the examples have better formability than that of the glasses produced in the comparative examples.

### [Manufacture of glass spacer]

The method of manufacturing a glass spacer is described with reference to FIG. 1(b).

After each glass composition obtained in the aforementioned examples was melted by the method described above, it was formed into pellets while being cooled. These pellets were fed into a manufacturing apparatus 100 and thereby a glass spacer was manufactured. The manufacturing apparatus used herein was the manufacturing apparatus 100 shown in FIG. 1(b).

In the manufacturing apparatus 100 shown in FIG. 1(b), the aforementioned pellets were fed into a refractory furnace vessel 20 and were melted by being heated with a heater 30. Thus, a glass material 40 was obtained. This glass material 40 was drawn out through a nozzle 21 attached to the lower part of the refractory furnace vessel 20 and thereby was formed into a fibrous preform 50. This preform was cut to a predetermined length and thus columnar glass spacers were manufactured. These glass spacers had a size and accuracy required for an electron beam-excited display.

## Claims

1. A glass composition, comprising the following components, in terms of mass%:
20 ≤ SiO₂ < 40,
6 < B₂O₃ ≤ 30,
0 ≤ Al₂O₃ ≤ 20,
45 ≤ SiO₂+B₂O₅+Al₂O₃ ≤ 74,
0 ≤ MgO ≤ 15,
5 ≤ CaO ≤ 40,
0 ≤ SrO ≤ 30,
0 ≤ BaO < 25,
0 < (SrO+BaO) ≤50,
20 ≤ (MgO+CaO+SrO+BaO) ≤ 60,
0 ≤ ZnO ≤ 10,
0 ≤ ZrO₂ < 10,
0 ≤ La₂O₃ ≤ 20,
0 ≤ Y₂O₃ ≤ 10,
0 ≤ TiO₂ ≤ 3,
1 ≤ Fe₂O₃ ≤ 12,
0 ≤ Nb₂O₅ ≤ 10,
0 ≤ Ta₂O₅ ≤ 10, and
1 ≤ TiO₂+Fe₂O₃+Nb₂O₅+Ta₂O₅ ≤ 12, and
being substantially free of alkali metal oxide.

2. The glass composition according to claim 1, wherein the average linear expansion coefficient at 50 to 350°C is between 70 × 10⁻⁷/°C and 100 × 10⁻⁷/°C.

3. The glass composition according to claim 1, wherein the Young's modulus is at least 85 GPa.

4. The glass composition according to claim 1, wherein the temperature difference obtained by subtracting devitrification temperature from temperature at which the glass composition has a viscosity of 100 dPa·sec is at least 0°C.

5. A glass spacer composed of a glass composition according to claim 1.

6. A glass spacer composed of a glass composition according to claim 2.

7. A glass spacer composed of a glass composition according to claim 3.

8. A glass spacer composed of a glass composition according to claim 4.

9. An electron beam-excited display, comprising a vacuum container as well as an electron-emitting element and a glass spacer that are disposed inside the vacuum container,
wherein the glass spacer is composed of a glass composition according to claim 1.
